# EUROPÄISCHE PATENTSCHRIFT

(11) **EP 3 659 773 B1**
(45) Veröffentlichungstag und Bekanntmachung des Hinweises auf die Patenterteilung: **07.06.2023**
(21) Anmeldenummer: 18209566.1
(22) Anmeldetag: 30.11.2018
(51) Int. Cl.: B29B 7/84, B29B 7/48, B29B 7/74, B29B 7/88, B29C 48/00, B29C 48/40, B29C 48/76, B29B 7/72

(54) **VERFAHREN UND VORRICHTUNG ZUR AUFBEREITUNG EINER STYROL-ACRYLNITRIL-SCHMELZE**
METHOD AND DEVICE FOR PREPARING A STYRENE-ACRYLONITRILE MELT
PROCÉDÉ ET DISPOSITIF DE PRÉPARATION D'UNE MASSE EN FUSION DE STYRÈNE-ACRYLONITRILE

(43) Veröffentlichungstag der Anmeldung: 03.06.2020
(73) Patentinhaber: Coperion GmbH, 70469 Stuttgart (DE)
(72) Erfinder: Sauer, Matthias, 71254 Ditzingen (DE); Lechner, Frank, 76227 Karlsruhe-Durlach (DE)
(74) Vertreter: Rau, Schneck & Hübner Patentanwälte Rechtsanwälte PartGmbB

(56) Entgegenhaltungen:
- EP-A1- 0 965 607
- EP-A1- 2 965 889
- EP-A1- 3 175 967
- DE-A1- 2 417 792
- DE-A1-102004 019 455
- DE-A1-102007 029 010
- US-A- 5 565 161

## Beschreibung

Die Erfindung betrifft ein Verfahren und eine Vorrichtung zur Aufbereitung einer Styrol-Acrylnitril-Schmelze.

Aus der EP 3 175 967 A1 sind ein Verfahren und eine Vorrichtung zur Aufbereitung einer Styrol-Acrylnitril-Schmelze bekannt. Mittels einer Zuführeinrichtung wird der Styrol-Acrylnitril-Schmelze, die sich in einer Schneckenmaschine befindet, ein vorentwässerter Kautschuk dosiert zugeführt. Der vorentwässerte Kautschuk reduziert die Temperatur der Styrol-Acrylnitril-Schmelze, so dass für die nachfolgende Aufbereitung der Mischung aus der Styrol-Acrylnitril-Schmelze und dem Kautschuk ein vergleichsweise großes Temperatur-Betriebsfenster und Drehzahl-Betriebsfenster bis zur Zersetzungstemperatur der gebildeten Mischung zur Verfügung steht. Die Aufbereitung erfolgt hierdurch schonend, so dass die Mischung in gewünschter Weise eine modifizierte Schlagzähigkeit erhält.

Aus der DE 24 17 792 A1 ist ein Verfahren zum Einmischen von Zusatzstoffen in Kunststoffe unter gleichzeitigem Entfernen flüchtiger Bestandteile bekannt. In einen Extruder werden an einer Einspeisestelle zunächst Zusatzstoffe zugeführt. Anschließend wird an einer stromabwärts angeordneten Einspeisestelle Kunststoff zugeführt, der in einem Wärmetauscher vorerhitzt wurde. An einer stromabwärts der Einspeisestellen für die Zusatzstoffe und den Kunststoff angeordneten Einspeisestelle wird ein Schleppmittel zugeführt, das restliche flüchtige Bestandteile aus dem Extruder entfernt.

Aus der DE 10 2007 029 010 A1 ist ein Verfahren zum Compoundieren von mindestens zwei Polymeren unter Verwendung eines Schneckenwellenextruders bekannt. In den Extruder wird ein Schleppmittel zugeführt.

Aus der EP 2 965 889 A1 sind Mischelemente bekannt, die eine verbesserte Dispergierung von gasförmigen, flüssigen oder festen Additiven sowie von Schleppmitteln ermöglichen.

Aus der US 5,565,161 A ist ein Verfahren zur Herstellung eines funktionalisierten thermoplastischen Polymers in einem Extruder bekannt.

Aus der DE 10 2004 019 455 A1 ist ein Verfahren zur Herstellung von Formmassen bekannt, die eine thermoplastische Matrix und einen darin dispergierten Kautschuk enthalten.

Aus der EP 0 965 607 A1 ist ein mehrstufiges Verfahren zur Herstellung einer Kunststoffmischung bekannt.

Der Erfindung liegt die Aufgabe zugrunde, ein Verfahren zur Aufbereitung einer Styrol-Acrylnitril-Schmelze zu schaffen, das in einfacher Weise die Herstellung einer Mischung aus der Styrol-Acrylnitril-Schmelze und einem Kautschuk mit verbesserten mechanischen, chemischen und optischen Eigenschaften ermöglicht.

Diese Aufgabe wird durch ein Verfahren mit den Merkmalen des Anspruchs 1 gelöst. Durch das zugeführte und in die Styrol-Acrylnitril-Schmelze (SAN-Schmelze) eingemischte Schleppmittel wird die in der Schneckenmaschine gebildete Mischung effizienter entgast. Das Schleppmittel vereinfacht und verbessert das Entfernen unerwünschter flüchtiger Bestandteile aus der Styrol-Acrylnitril-Schmelze und erhöht somit die Entgasungsleistung. Eine Entgasungseinrichtung zum Entgasen ist beispielsweise als Vorwärts-Entgasungseinrichtung und/oder als Rückwärts-Entgasungseinrichtung ausgebildet. Das Schleppmittel vermindert die Temperatur der Styrol-Acrylnitril-Schmelze, so dass zur Verbesserung der Entgasungsleistung mittels der Schneckenmaschine eine intensive Durchmischung und Oberflächenerneuerung der Styrol-Acrylnitril-Schmelze durchführbar ist, ohne dass eine kritische Zersetzungstemperatur des Styrols erreicht wird. Durch die verbesserte Entgasung werden insbesondere unerwünschte Monomeranteile, beispielsweise des Acrylnitrils des Styrols und/oder des Ethylbenzols, in der Styrol-Acrylnitril-Schmelze reduziert. Der Monomeranteil des Acrylnitrils, des Styrols und/oder des Ethylbenzols beträgt nach dem Entgasen insbesondere höchstens 20 ppm, insbesondere höchstens 15 ppm, und insbesondere höchstens 10 ppm. Durch das Mischen der Styrol-Acrylnitril-Schmelze und des Kautschuks werden die mechanischen Eigenschaften eingestellt und verbessert. Durch die effiziente Entgasung werden die chemischen Eigenschaften und/oder die optischen Eigenschaften der Mischung aus der Styrol-Acrylnitril-Schmelze und dem zugeführten Kautschuk verbessert. Durch die effiziente Entgasung wird der Restmonomergehalt in der Mischung erheblich reduziert, so dass aus dem aus der Mischung hergestellten Endprodukt im Wesentlichen keine flüchtigen organischen Verbindungen (VOC: Volatile Organic Compounds) austreten, was beispielsweise im Lebensmittelbereich von hoher Bedeutung ist. Durch die Zugabe des Schleppmittels und das Entgasen wird zudem das Verhältnis von Restmonomergehalt zu Farbe bzw. Farbpartikeln verbessert. Beispielsweise wird der Gelb-Index (Yellow Index) verbessert, so dass die Mischung weißer ist. Dadurch, dass die Styrol-Acrylnitril-Schmelze durch die Zugabe des Schleppmittels gekühlt wird, wird eine thermische Zersetzung und die Entstehung von unerwünschten Monomeranteilen in der Styrol-Acrylnitril-Schmelze gehemmt. Das Schleppmittel wird vorzugsweise als Flüssigkeit und/oder Gas zugeführt. Als Schleppmittel wird beispielsweise Wasser, Stickstoff und/oder Kohlendioxid verwendet. Als Kautschuk kann Naturkautschuk und/oder Synthesekautschuk eingesetzt werden. Vorzugsweise wird als Kautschuk Acrylnitril-Butadien-Styrol (ABS) zugeführt. Der Kautschuk wird vorzugsweise als Schüttgut, insbesondere als Granulat und/oder Pulver, oder als Suspension (Slurry) zugeführt. Der Wassergehalt des Kautschuks beträgt höchstens 65 Gew.-%, insbesondere höchstens 50 Gew.-%, insbesondere höchstens 40 Gew.-%, insbesondere höchstens 35 Gew.-%, und insbesondere höchstens 30 Gew.-%.

Die Schneckenmaschine ist vorzugsweise als gleichsinnig drehangetriebene und/oder dicht kämmende Mehrwellen-Schneckenmaschine, insbesondere Zweiwellen-Schneckenmaschine, ausgebildet.

Dadurch, dass das Schleppmittel vor dem Zuführen des Kautschuks zugeführt und die gebildete Mischung entgast wird, wird die Herstellung der Mischung mit verbesserten mechanischen, chemischen und optischen Eigenschaften gewährleistet. Das Schleppmittel wird in einer Förderrichtung der Schneckenmaschine stromaufwärts zu einer Zuführstelle bzw. einer Zuführzone des Kautschuks zugeführt. Hierdurch wird der Styrol-Acrylnitril-Schmelze, in die noch kein Kautschuk eingemischt ist, das Schleppmittel zugeführt. Das Zuführen des Schleppmittels erfolgt in der Förderrichtung stromaufwärts zu mindestens einer Entgasungszone der Schneckenmaschine. Die mindestens eine Entgasungszone ist in der Förderrichtung stromaufwärts zu der Zuführstelle des Kautschuks angeordnet. Beispielsweise weist die Schneckenmaschine eine Entgasungszone oder zwei Entgasungszonen auf, die in der Förderrichtung stromaufwärts zu der Zuführstelle des Kautschuks angeordnet sind. Vorzugsweise wird in der Förderrichtung stromaufwärts jeder Entgasungszone das Schleppmittel zugeführt. Das Entgasen erfolgt mittels einer Entgasungseinrichtung, die der jeweiligen Entgasungszone zugeordnet ist. Die jeweilige Entgasungseinrichtung ist beispielsweise als Seitenentgasungsmaschine und/oder als Entgasungsdom und/oder als Stopfschnecke ausgebildet. Durch das zugeführte Schleppmittel wird die Styrol-Acrylnitril-Schmelze gekühlt. Infolge der verbesserten Entgasung werden die Monomeranteile erheblich reduziert.

Ein Verfahren nach Anspruch 2 gewährleistet die Herstellung der Mischung mit verbesserten mechanischen, chemischen und optischen Eigenschaften. Das Schleppmittel wird in einer Förderrichtung der Schneckenmaschine stromaufwärts zu einer Zuführstelle bzw. Zuführzone des Kautschuks zugeführt. Das Schleppmittel wird insbesondere mit dem Gewichtsanteil in der Förderrichtung stromaufwärts der jeweiligen Entgasungszone zugeführt. Beispielsweise wird das Schleppmittel mit einem Gewichtsanteil von mehr als 1 Gew.-% bezogen auf die Styrol-Acrylnitril-Schmelze zugeführt.

Ein Verfahren nach Anspruch 3 gewährleistet die Herstellung der Mischung mit verbesserten mechanischen, chemischen und optischen Eigenschaften. Das Schleppmittel wird in einer Förderrichtung der Schneckenmaschine stromabwärts zu einer Zuführstelle bzw. einer Zuführzone des Kautschuks zugeführt. Die gebildete Mischung aus der Styrol-Acrylnitril-Schmelze, dem Kautschuk und dem Schleppmittel wird anschließend entgast. Durch das Schleppmittel werden die Styrol-Acrylnitril-Schmelze und der Kautschuk gekühlt. Hierdurch wird eine intensive Durchmischung und Oberflächenerneuerung der Mischung ermöglicht, ohne dass eine kritische Zersetzungstemperatur der Mischung erreicht wird. Durch das Schleppmittel werden unerwünschte flüchtige Bestandteile in einfacher und effizienter Weise aus der Styrol-Acrylnitril-Schmelze und dem Kautschuk entfernt. Das Zuführen des Schleppmittels erfolgt in der Förderrichtung stromaufwärts zu mindestens einer Entgasungszone der Schneckenmaschine. Die mindestens eine Entgasungszone ist in der Förderrichtung stromabwärts zu der Zuführstelle des Kautschuks angeordnet. Beispielsweise weist die Schneckenmaschine eine Entgasungszone oder zwei Entgasungszonen auf, die in der Förderrichtung stromabwärts zu der Zuführstelle des Kautschuks angeordnet sind. Vorzugsweise wird in der Förderrichtung stromaufwärts jeder Entgasungszone das Schleppmittel zugeführt. Das Entgasen erfolgt mittels einer Entgasungseinrichtung, die der jeweiligen Entgasungszone zugeordnet ist. Die jeweilige Entgasungseinrichtung ist beispielsweise als Seitenentgasungsmaschine und/oder als Entgasungsdom und/oder als Stopfschnecke ausgebildet.

Ein Verfahren nach Anspruch 4 gewährleistet die Herstellung der Mischung mit verbesserten mechanischen, chemischen und optischen Eigenschaften. Das Schleppmittel mit dem Gewichtsanteil wird vorzugsweise in einer Förderrichtung der Schneckenmaschine stromaufwärts jeder Entgasungszone, die stromabwärts einer Zuführstelle des Kautschuks angeordnet ist, zugeführt. Vorzugsweise wird der Styrol-Acrylnitril-Schmelze das Schleppmittel in der Förderrichtung stromaufwärts zu der Zuführstelle des Kautschuks und stromabwärts zu der Zuführstelle des Kautschuks zugeführt. Der Gewichtsanteil des stromaufwärts der Zuführstelle zugeführten Schleppmittels ist insbesondere größer oder kleiner als der Gewichtsanteil des stromabwärts der Zuführstelle zugeführten Schleppmittels oder gleich.

Ein Verfahren nach Anspruch 5 gewährleistet die Herstellung der Mischung mit verbesserten mechanischen, chemischen und optischen Eigenschaften. Dadurch, dass das Schleppmittel stromaufwärts zu der Entgasungszone zugeführt wird, wird dieses vor dem Entgasen in die Styrol-Acrylnitril-Schmelze eingemischt, so dass flüchtige Bestandteile effizient aus der Styrol-Acrylnitril-Schmelze entfernt werden können. Der jeweiligen Entgasungszone ist insbesondere eine Entgasungseinrichtung zugeordnet. Vorzugsweise wird das Schleppmittel stromaufwärts jeder Entgasungszone zugeführt. Vorzugsweise ist mindestens eine Entgasungszone stromaufwärts einer Zuführstelle bzw. einer Zuführzone des Kautschuks und mindestens eine Entgasungszone stromabwärts der Zuführstelle des Kautschuks angeordnet.

Ein Verfahren nach Anspruch 6 gewährleistet die einfache Herstellung der Mischung mit verbesserten mechanischen, chemischen und optischen Eigenschaften. Das Schleppmittel wird zunächst dem Kautschuk zugeführt und eine Mischung aus dem Kautschuk und dem Schleppmittel anschließend an einer Zuführstelle in die Schneckenmaschine zugeführt. Die Mischung aus dem Kautschuk und dem Schleppmittel wird vorzugsweise mittels einer Zuführeinrichtung in die Schneckenmaschine zugeführt. Die Zuführeinrichtung umfasst beispielsweise eine gravimetrische Dosiereinheit und/oder eine Zuführschneckenmaschine.

Ein Verfahren nach Anspruch 7 gewährleistet die Herstellung der Mischung mit verbesserten mechanischen, chemischen und optischen Eigenschaften. Vorzugsweise wird zusätzlich Schleppmittel in einer Förderrichtung stromabwärts zu der Zuführstelle des Kautschuks zugeführt.

Ein Verfahren nach Anspruch 8 gewährleistet die einfache Herstellung der Mischung mit verbesserten mechanischen, chemischen und optischen Eigenschaften. Wasser ist in der Handhabung einfach und kostengünstig. Zudem ermöglicht Wasser als Schleppmittel eine effiziente Kühlung und eine erhebliche Reduzierung des Monomeranteils des Acrylnitrils in der Styrol-Acrylnitril-Schmelze.

Ein Verfahren nach Anspruch 9 gewährleistet die Herstellung der Mischung mit verbesserten mechanischen, chemischen und optischen Eigenschaften. Je geringer der Wassergehalt des Kautschuks ist, desto besser können die Eigenschaften der Mischung mittels des Schleppmittels beeinflusst und eingestellt werden. Insbesondere kann umso mehr Schleppmittel zugeführt werden, je geringer der Wassergehalt des Kautschuks ist. Vorzugsweise ist der Kautschuk vorentwässert und/oder teilentwässert. Die Bereitstellung des vorentwässerten bzw. teilentwässerten Kautschuks erfolgt vor dem Zuführen des Kautschuks zu einer Zuführeinrichtung.

Ein Verfahren nach Anspruch 10 gewährleistet die Herstellung der Mischung mit verbesserten mechanischen, chemischen und optischen Eigenschaften. Dadurch, dass die Zuführeinrichtung lediglich zum dosierten Zuführen des Kautschuks und gegebenenfalls des Schleppmittels dient, ist die Temperaturdifferenz ΔT_{K} des Kautschuks aufgrund eine Energieeintrags in der Zuführeinrichtung gering. Vorzugsweise umfasst die Zuführeinrichtung eine Zuführschneckenmaschine. Dadurch, dass die Temperatur des Kautschuks in der Zuführeinrichtung kaum erhöht wird, ist diese bei Zuführung des Kautschuks in die Styrol-Acrylnitril-Schmelze gering, wodurch die Temperatur der Styrol-Acrylnitril-Schmelze in vorteilhafter Weise erniedrigt wird.

Ein Verfahren nach Anspruch 11 gewährleistet die Herstellung der Mischung mit verbesserten mechanischen, chemischen und optischen Eigenschaften. Dadurch, dass die Temperatur des Kautschuks bei Zuführung in die Styrol-Acrylnitril-Schmelze gering ist, wird die Temperatur der Styrol-Acrylnitril-Schmelze in vorteilhafter Weise erniedrigt.

Ein Verfahren nach Anspruch 12 gewährleistet die Herstellung der Mischung mit verbesserten mechanischen, chemischen und optischen Eigenschaften. Die mindestens eine Entgasungseinrichtung ist einer jeweiligen Entgasungszone der Schneckenmaschine zugeordnet. Die mindestens eine Entgasungseinrichtung ist insbesondere als Vakuum-Entgasungseinrichtung ausgebildet. Die jeweilige Entgasungszone ist vorzugsweise stromaufwärts und stromabwärts zu einer Förderrichtung der Schneckenmaschine durch Stauelemente begrenzt, die die Ausbildung einer stromaufwärts und stromabwärts angeordneten Schmelzedichtung ermöglichen. Die mindestens eine Entgasungseinrichtung ist beispielsweise als Seitenentgasungsmaschine und/oder als Entgasungsdom und/oder als Stopfschnecke ausgebildet.

Ein Verfahren nach Anspruch 13 gewährleistet die Herstellung der Mischung mit verbesserten mechanischen, chemischen und optischen Eigenschaften. Durch das erzeugte Vakuum werden unerwünschte flüchtige Bestandteile einfach und effizient aus der Styrol-Acrylnitril-Schmelze entfernt. Insbesondere wird die Styrol-Acrylnitril-Schmelze in einfacher Weise entfeuchtet, so dass die in einer Austragszone der Schneckenmaschine vorliegende Mischung einen geringen Wassergehalt hat. Der Druck ist ein Absolut-Druck.

Der Erfindung liegt ferner die Aufgabe zugrunde, eine Vorrichtung zur Aufbereitung einer Styrol-Acrylnitril-Schmelze zu schaffen, die in einfacher Weise die Herstellung einer Mischung aus der Styrol-Acrylnitril-Schmelze und einem Kautschuk mit verbesserten mechanischen, chemischen und optischen Eigenschaften ermöglicht.

Diese Aufgabe wird durch eine Vorrichtung mit den Merkmalen des Anspruchs 14 gelöst. Die Vorteile der erfindungsgemäßen Vorrichtung entsprechen den bereits beschriebenen Vorteilen des erfindungsgemäßen Verfahrens. Mindestens eine Schleppmittel-Zuführeinrichtung ermöglicht die Zuführung eines Schleppmittels in die Styrol-Acrylnitril-Schmelze. Die Schleppmittel-Zuführeinrichtung ist in einer Förderrichtung der Schneckenmaschine stromaufwärts zu einer Zuführstelle bzw. Zuführzone des Kautschuks angeordnet. Zusätzlich kann mindestens eine Schleppmittel-Zuführeinrichtung stromabwärts zu einer Zuführstelle des Kautschuks angeordnet sein. Die jeweilige Schleppmittel-Zuführeinrichtung ist insbesondere einer jeweiligen Entgasungszone der Schneckenmaschine zugeordnet. Vorzugsweise ist die jeweilige Schleppmittel-Zuführeinrichtung in der Förderrichtung stromaufwärts zu der jeweiligen Entgasungszone angeordnet. Der jeweiligen Entgasungszone ist vorzugsweise eine Entgasungseinrichtung zugeordnet. Die mindestens eine Schleppmittel-Zuführeinrichtung kann insbesondere auch an der zweiten Zuführeinrichtung angeordnet sein, so dass Schleppmittel zu dem Kautschuk zuführbar ist.

Weitere Merkmale, Vorteile und Einzelheiten der Erfindung ergeben sich aus der nachfolgenden Beschreibung mehrerer Ausführungsbeispiele. Es zeigen:
- Fig. 1: eine teilweise geschnitten dargestellte Vorrichtung zur Aufbereitung einer Styrol-Acrylnitril-Schmelze gemäß einem ersten Ausführungsbeispiel,
- Fig. 2: eine teilweise geschnittene Draufsicht auf die Vorrichtung in Fig. 1, und
- Fig. 3: eine teilweise geschnitten dargestellte Vorrichtung zur Aufbereitung einer Styrol-Acrylnitril-Schmelze gemäß einem zweiten Ausführungsbeispiel.

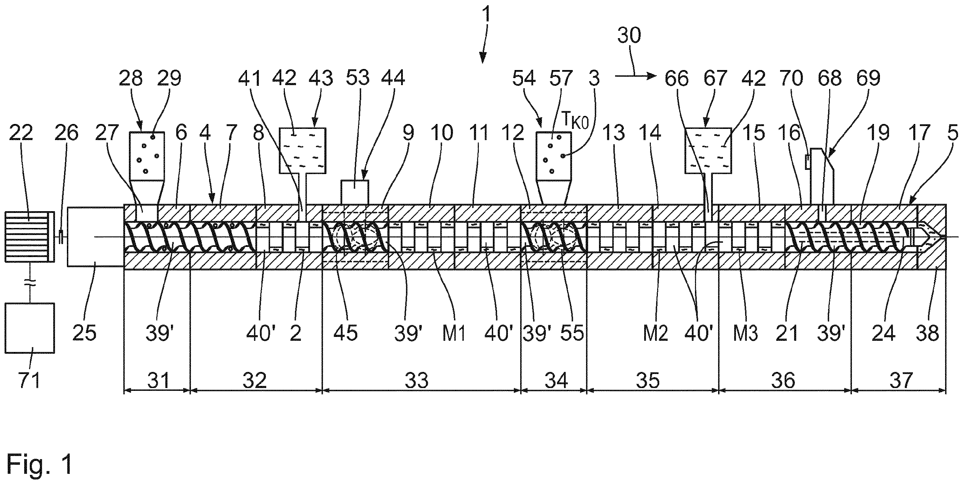

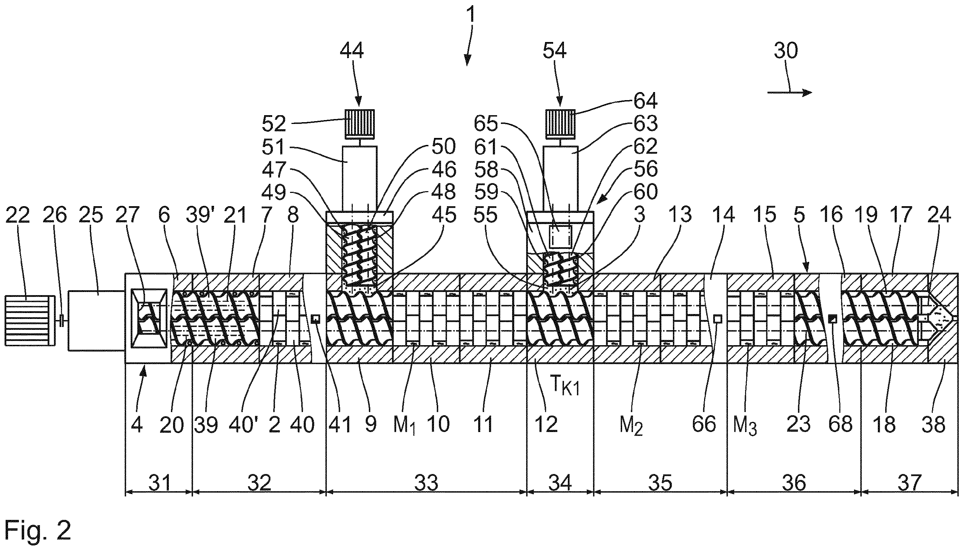

Nachfolgend ist anhand der Fig. 1 und 2 ein erstes Ausführungsbeispiel der Erfindung beschrieben. Eine Vorrichtung 1 dient zur Aufbereitung einer Styrol-Acrylnitril-Schmelze 2 (SAN-Schmelze) durch Einmischen eines Kautschuks 3.

Die Vorrichtung 1 umfasst eine Mehrwellen-Schneckenmaschine 4, die ein Gehäuse 5 bzw. ein Verfahrensteil aus mehreren nacheinander angeordneten Gehäuseabschnitten 6 bis 17 aufweist. Die Gehäuseabschnitte 6 bis 17 sind zur Ausbildung des Gehäuses 5 bzw. des Verfahrensteils miteinander verbunden.

In dem Gehäuse 5 sind zwei zueinander parallele und einander durchdringende Gehäusebohrungen 18, 19 ausgebildet, die im Querschnitt die Form einer liegenden Acht haben. In den Gehäusebohrungen 18, 19 sind zwei Wellen 20, 21 konzentrisch angeordnet, die von einem Antriebsmotor 22 um zugehörige Drehachsen 23, 24 drehantreibbar sind. Zwischen den Wellen 20, 21 und dem Antriebsmotor 22 sind ein Verzweigungsgetriebe 25 und eine Kupplung 26 angeordnet. Die Wellen 20, 21 werden gleichsinnig, also in gleichen Drehrichtungen, um die Drehachsen 23, 24 angetrieben.

In dem dem Verzweigungsgetriebe 25 benachbarten ersten Gehäuseabschnitt 6 ist eine erste Zuführöffnung 27 ausgebildet, an die eine erste Zuführeinrichtung 28 zur Zuführung eines Styrol-Acrylnitril-Granulats 29 (SAN-Granulat) in die Gehäusebohrungen 18, 19 angeschlossen ist. Die Schneckenmaschine 4 weist in einer Förderrichtung 30 nacheinander eine Einzugszone 31, eine Aufschmelzzone 32, eine erste Entgasungszone 33, eine Zuführzone 34, eine Mischzone 35, eine zweite Entgasungszone 36 und eine Austragszone 37 auf. An dem letzten Gehäuseabschnitt 17 ist eine das Gehäuse 5 abschließende Düsenplatte 38 angeordnet.

Zum Zuführen des Styrol-Acrylnitril-Granulats 29 mündet die erste Zuführeinrichtung 28 in die erste Zuführöffnung 27. Die erste Zuführeinrichtung 28 ist als gravimetrische Dosiereinheit ausgebildet. In der Einzugszone 31 sind auf den Wellen 20, 21 Schneckenelemente 39, 39' drehfest angeordnet, die das Styrol-Acrylnitril-Granulat 29 zu der Aufschmelzzone 32 fördern.

Zum Aufschmelzen des Styrol-Acrylnitril-Granulats 29 sind in der Aufschmelzzone 32 Knetelemente 40, 40` drehfest auf den Wellen 20, 21 angeordnet. In der Aufschmelzzone 32 weist das Gehäuse 5 eine erste Schleppmittel-Zuführöffnung 41 auf, an die zur Zuführung eines Schleppmittels 42 eine erste Schleppmittel-Zuführeinrichtung 43 angeschlossen ist.

In der ersten Entgasungszone 33 sind zur Herstellung einer Mischung M₁ aus der Styrol-Acrylnitril-Schmelze 2 und dem zugeführten Schleppmittel 42 Schneckenelemente 39, 39' und Knetelemente 40, 40` drehfest auf den Wellen 20, 21 angeordnet. Zum Abführen von Wasserdampf und/oder flüchtigen Bestandteilen aus der Mischung M₁ ist in der ersten Entgasungszone 33 eine erste Entgasungseinrichtung 44 an die Schneckenmaschine 4 angeschlossen. Die erste Entgasungseinrichtung 44 ist als Seitenentgasungsmaschine ausgebildet. Zum Anschließen der Seitenentgasungsmaschine ist seitlich in dem Gehäuseabschnitt 9 eine erste Entgasungsöffnung 45 ausgebildet.

Die Seitenentgasungsmaschine umfasst ein Gehäuse 46 mit zwei Gehäusebohrungen 47, 48, in denen zwei Schneckenwellen 49, 50 angeordnet sind. Die Schneckenwellen 49, 50 sind über ein Verzweigungsgetriebe 51 mittels eines Antriebsmotors 52 in gleichen Drehrichtungen drehantreibbar. Die Schneckenwellen 49, 50 münden in die erste Entgasungsöffnung 45 und dienen zum Zurückhalten der Mischung M₁ in den Gehäusebohrungen 18, 19. In das Gehäuse 46 mündet ein Vakuum-Anschluss 53 zum Absaugen von Wasserdampf und/oder flüchtigen Bestandteilen.

Zur Zuführung des Kautschuks 3 mündet eine zweite Zuführeinrichtung 54 in der Zuführzone 34 in die Schneckenmaschine 4. Hierzu ist in dem Gehäuseabschnitt 12 seitlich eine zweite Zuführöffnung 55 ausgebildet, die im Querschnitt die Form einer liegenden Acht hat und in die Gehäusebohrung 19 mündet. Die Zuführzone 34 definiert eine Zuführstelle des Kautschuks 3. In der Zuführzone 34 sind Schneckenelemente 39, 39' drehfest auf den Wellen 20, 21 angeordnet. Die Mischung M₁ und der zugeführte Kautschuk 3 werden mittels der Schneckenelemente 39, 39' zu der Mischzone 35 gefördert.

Die zweite Zuführeinrichtung 54 umfasst eine Zuführschneckenmaschine 56 und eine gravimetrische Dosiereinheit 57. Die Zuführschneckenmaschine 56 weist ein Gehäuse 58 mit zwei Gehäusebohrungen 59, 60 auf, in denen zwei Schneckenwellen 61, 62 angeordnet sind. Die Schneckenwellen 61, 62 sind über ein Verzweigungsgetriebe 63 mittels eines Antriebsmotors 64 gleichsinnig drehantreibbar. Die Schneckenwellen 61, 62 münden in die zweite Zuführöffnung 55. Die Zuführschneckenmaschine 56 ist als Seitenbeschickungsmaschine ausgebildet und seitlich an dem Gehäuse 5 befestigt. In dem Gehäuse 58 ist eine Beschickungsöffnung 65 ausgebildet, in die die gravimetrische Dosiereinheit 57 mündet.

In der Mischzone 35 sind zur Herstellung einer Mischung M₂ aus der Mischung M₁ und dem Kautschuk 3 Knetelemente 40, 40` drehfest auf den Wellen 20, 21 angeordnet. In der Mischzone 35 ist in dem Gehäuse 5 eine zweite Schleppmittel-Zuführöffnung 66 ausgebildet, an die zur Zuführung von Schleppmittel 42 eine zweite Schleppmittel-Zuführeinrichtung 67 angeschlossen ist.

Zur Herstellung einer Mischung M₃ aus der Mischung M₂ und dem zugeführten Schleppmittel 42 und zur Oberflächenerneuerung der Mischung M₃ sind in der zweiten Entgasungszone 36 Schneckenelemente 39, 39' und Knetelemente 40, 40` drehfest auf den Wellen 20, 21 angeordnet. Zum Abführen von Wasserdampf und/oder flüchtigen Bestandteilen aus der Mischung M₃ ist in der zweiten Entgasungszone 36 eine zweite Entgasungsöffnung 68 in dem Gehäuse 5 ausgebildet, an die eine zweite Entgasungseinrichtung 69 angeschlossen ist. Die zweite Entgasungseinrichtung 69 ist als Vakuum-Entgasungsdom ausgebildet. Der Vakuum-Entgasungsdom ist an einer Oberseite des Gehäuses 5 angeordnet. Die zweite Entgasungseinrichtung 69 weist einen Vakuum-Anschluss 70 zum Absaugen von Wasserdampf und/oder flüchtigen Bestandteilen auf.

In der Austragszone 37 sind Schneckenelemente 39, 39' auf den Wellen 20, 21 drehfest angeordnet, die zum Druckaufbau und zum Austragen der Mischung M₃ durch die Düsenplatte 38 dienen.

Die Knetelemente 40, 40` sind beispielsweise als einzelne Knetscheiben oder als mindestens ein Knetblock mit mehreren einstückig miteinander verbundenen Knetscheiben ausgebildet.

Zur Steuerung weist die Vorrichtung 1 eine Steuereinrichtung 71 auf. Mittels der Steuereinrichtung 71 sind insbesondere die Schneckenmaschine 4, die Zuführeinrichtungen 28, 54, die Schleppmittel-Zuführeinrichtungen 43, 67 und/oder die Entgasungseinrichtungen 44, 69 steuerbar.

Die Funktionsweise der Vorrichtung 1 ist wie folgt:
Mittels der ersten Zuführeinrichtung 28 wird Styrol-Acrylnitril-Granulat 29 als Schüttgut durch die erste Zuführöffnung 27 der Schneckenmaschine 4 dosiert zugeführt. In der Einzugszone 31 wird das Styrol-Acrylnitril-Granulat 29 zu der Aufschmelzzone 32 gefördert, wo das Styrol-Acrylnitril-Granulat 29 aufgeschmolzen wird.

In der Aufschmelzzone 32 wird der Styrol-Acrylnitril-Schmelze 2 das Schleppmittel 42 zugeführt. Das Schleppmittel 42 ist Wasser. Mittels der ersten Schleppmittel-Zuführeinrichtung 43 wird das Schleppmittel 42 bezogen auf die Styrol-Acrylnitril-Schmelze 2 mit einem Gewichtsanteil von 0,05 Gew.-% bis 5 Gew.-%, insbesondere von 0,1 Gew.-% bis 3 Gew.-%, und insbesondere 0,2 Gew.-% bis 2 Gew.-% dosiert zugeführt.

In der ersten Entgasungszone 33 stromaufwärts zu der Zuführzone 34 bzw. der Zuführstelle des Kautschuks 3 wird das Schleppmittel 42 in die Styrol-Acrylnitril-Schmelze 2 eingemischt und die gebildete Mischung M₁ entgast. Durch das zugeführte Schleppmittel 42 wird die Styrol-Acrylnitril-Schmelze 2 einerseits gekühlt, so dass in der ersten Entgasungszone 33 eine intensive Durchmischung und Oberflächenerneuerung stattfinden kann, ohne dass die Mischung M₁ eine kritische Zersetzungstemperatur erreicht. Andererseits löst das Schleppmittel 42 unerwünschte flüchtige Bestandteile aus der Mischung M₁, so dass diese mittels der ersten Entgasungseinrichtung 44 aus der Styrol-Acrylnitril-Schmelze 2 bzw. der Schneckenmaschine 4 entfernt werden können. Die erste Entgasungseinrichtung 44 erzeugt hierzu ein Vakuum mit einem Absolut-Druck zwischen 0 mbar_{abs} und 1000 mbar_{abs}, insbesondere zwischen 10 mbar_{abs} und 800 mbar_{abs}, und insbesondere zwischen 20 mbar_{abs} und 400 mbar_{abs}. Durch die Entgasung mit Hilfe des Schleppmittels 42 werden unerwünschte Monomeranteile, insbesondere des Acrylnitrils, erheblich reduziert. Der Restmonomergehalt ist somit niedrig.

In der Zuführzone 34 wird der entgasten Mischung M₁ der Kautschuk 3 zugeführt. Der Kautschuk 3 ist vorentwässert und wird mittels der gravimetrischen Dosiereinheit 57 der Zuführschneckenmaschine 56 dosiert zugeführt. Die Zuführschneckenmaschine 56 fördert den Kautschuk 3 durch die zweite Zuführöffnung 55 in die Gehäusebohrungen 18, 19. Der teilweise entwässerte bzw. vorentwässerte Kautschuk 3 wird als Schüttgut zugeführt, insbesondere als Granulat und/oder Pulver. Der vorentwässerte Kautschuk 3 ist beispielsweise ein Naturkautschuk und/der ein Synthesekautschuk. Vorzugsweise ist der Kautschuk 3 ein Synthesekautschuk, beispielsweise Acrylnitril-Butadien-Styrol (ABS).

Da der Kautschuk 3 bereits vor der Zuführung in die zweite Zuführeinrichtung 54 vorentwässert wurde und einen niedrigen Wassergehalt hat, wird der vorentwässerte Kautschuk 3 mittels der Zuführeinrichtung 54 der Styrol-Acrylnitril-Schmelze 2 bzw. der Mischung M₁ lediglich dosiert zugeführt und in der Zuführeinrichtung 54 nicht weiter entwässert. Die Entwässerung des Kautschuks 3 erfolgte in einem vorgelagerten separaten Herstellungs- und/oder Aufbereitungsschritt, beispielsweise bei der Herstellung des Kautschuks 3 und/oder bei einer vorgelagerten mechanischen Entwässerung mittels einer separaten Schneckenmaschine. Der Kautschuk 3 weist bei Zuführung in die Zuführeinrichtung 54 einen Wassergehalt von höchstens 27 Gew.-%, insbesondere von höchstens 23 Gew.-%, und insbesondere von höchstens 18 Gew.-% auf. Der Wassergehalt des Kautschuks 3 ändert sich bei Abführung aus der Zuführeinrichtung 54 bezogen auf den Wassergehalt bei Zuführung in die Zuführeinrichtung 54 höchstens um 2 %, insbesondere höchstens um 1 %, und insbesondere höchstens um 0,5 %.

Dadurch, dass der vorentwässerte Kautschuk 3 mittels der Zuführeinrichtung 54 lediglich der Styrol-Acrylnitril-Schmelze 2 bzw. der Mischung M₁ zugeführt wird, wird kaum Energie in den Kautschuk 3 eingebracht. Der Kautschuk 3 weist bei Zuführung in die Zuführeinrichtung 54 eine Temperatur T_{K0} und bei Zuführung in die Styrol-Acrylnitril-Schmelze 2 bzw. die Mischung M₁ eine Temperatur T_{K1} auf, wobei für die Temperaturdifferenz ΔT_{K} = T_{K1} - T_{K0} gilt: ΔT_{K} ≤ 40 °C, insbesondere ΔT_{K} ≤ 30 °C, und insbesondere ΔT_{K} ≤ 20 °C. Weiterhin gilt für die Temperatur T_{K1}: T_{K1} ≤ 60 °C, insbesondere T_{K1} ≤ 50 °C, und insbesondere T_{K1} ≤ 40 °C. Dadurch, dass der vorentwässerte Kautschuk 3 bei Zuführung in die Styrol-Acrylnitril-Schmelze 2 bzw. in die Mischung M₁ eine geringe Temperatur T_{K1} hat, wird die Mischung M₁ durch das Zuführen des Kautschuks 3 abgekühlt.

Die Temperatur T_{K1} des Kautschuks 3 wird durch das Zuführen in die Styrol-Acrylnitril-Schmelze 2 bzw. die Mischung M₁ erhöht, wobei restliches Wasser aus dem Kautschuk 3 verdampft. Der entstehende Wasserdampf wird mittels der ersten Entgasungseinrichtung 44 über die erste Entgasungsöffnung 45 abgeführt.

Der Kautschuk 3 wird in der Mischzone 35 aufgeschmolzen und mit der Styrol-Acrylnitril-Schmelze 2 bzw. mit der entgasten Mischung M₁ zu der Mischung M₂ gemischt. Mittels der zweiten Schleppmittel-Zuführeinrichtung 67 wird der Mischung M₂ bzw. der Styrol-Acrylnitril-Schmelze 2 weiteres Schleppmittel 42 zugeführt. Das Schleppmittel 42 ist Wasser. Das Schleppmittel 42 wird somit in der Förderrichtung 30 stromabwärts zu der Zuführzone 34 bzw. der Zuführstelle des Kautschuks 3 zugeführt. Das Schleppmittel 42 wird bezogen auf die Mischung M₂ mit einem Gewichtsanteil von 0,05 Gew.-% bis 5 Gew.-%, insbesondere von 0,2 Gew.-% bis 3,5 Gew.-%, und insbesondere 0,5 Gew.-% bis 2 Gew.-% zugeführt.

Das zugeführte Schleppmittel 42 wird in der zweiten Entgasungszone 36 mit der Mischung M₂ zu der Mischung M₃ gemischt. Das Schleppmittel 42 kühlt die Mischung M₂, so dass in der zweiten Entgasungszone 36 eine intensive Durchmischung und Oberflächenerneuerung stattfinden kann, ohne dass eine kritische Zersetzungstemperatur der Mischung M₃ überschritten wird. Aus der Mischung M₃ werden in der zweiten Entgasungszone 36 unerwünschte flüchtige Bestandteile und entstehender Wasserdampf mittels der zweiten Entgasungseinrichtung 69 über die zweite Entgasungsöffnung 68 entfernt. Die zweite Entgasungseinrichtung 69 erzeugt ein Vakuum mit einem Absolut-Druck zwischen 0 mbar_{abs} und 1000 mbar_{abs}, insbesondere zwischen 10 mbar_{abs} und 800 mbar_{abs}, und insbesondere zwischen 20 mbar_{abs} und 200 mbar_{abs}. Die entgaste Mischung M₃ wird in der Austragszone 37 durch die Düsenplatte 38 aus der Schneckenmaschine 4 abgeführt und beispielsweise einer Granuliervorrichtung zugeführt.

Dadurch, dass der Styrol-Acrylnitril-Schmelze 2 Schleppmittel 42 zugegeben wird, wird die Temperatur der Styrol-Acrylnitril-Schmelze 2 bzw. der jeweiligen Mischung M₁, M₂ und M₃ erheblich reduziert, so dass die Aufbereitung der Styrol-Acrylnitril-Schmelze 2 äußerst schonend erfolgt. Durch das zugeführte Schleppmittel 42 werden unerwünschte flüchtige Bestandteile aus der Styrol-Acrylnitril-Schmelze 2 und der jeweils gebildeten Mischung M₁, M₂, M₃ gelöst und entfernt, so dass der Restmonomergehalt äußerst gering ist. Der Monomeranteil des Acrylnitrils, des Styrols und/oder des Ethylbenzols ist insbesondere höchstens 20 ppm, insbesondere höchstens 15 ppm und insbesondere höchstens 10 ppm. Durch den geringen Restmonomeranteil verbessern sich die mechanischen, chemischen und optischen Eigenschaften der Mischung M₃. Der Monomeranteil ist insbesondere auf die Styrol-Acrylnitril-Schmelze 2 bezogen.

Der Styrol-Acrylnitril-Schmelze 2 bzw. dem Styrol-Acrylnitril-Granulat 29 und/oder dem Kautschuk 3 können in üblicher Weise Additive und/oder Zuschlagstoffe zugegeben werden. Bezogen auf den Gesamtdurchsatz der Mischung M₃ ist der Gewichtsanteil des Kautschuks 3 zwischen 1 Gew.-% und 50 Gew.-%, insbesondere zwischen 5 Gew.-% und 35 Gew.-%, und insbesondere zwischen 10 Gew.-% und 25 Gew.-%.

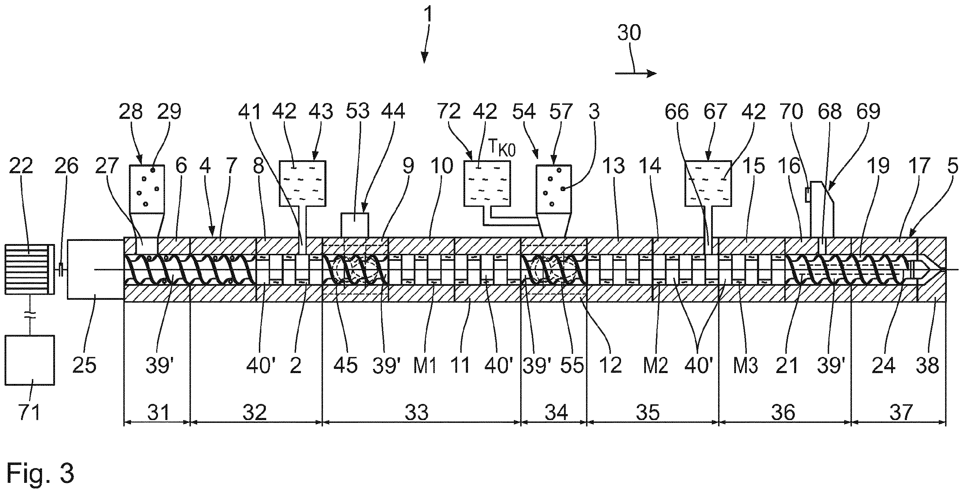

Nachfolgend ist anhand von Fig. 3 ein zweites Ausführungsbeispiel der Erfindung beschrieben. Im Unterschied zu dem ersten Ausführungsbeispiel wird dem Kautschuk 3 mittels einer dritten Schleppmittel-Zuführeinrichtung 72 Schleppmittel 42 zugeführt. Das Schleppmittel 42 ist Wasser. Bezogen auf die Mischung M₂ aus der Styrol-Acrylnitril-Schmelze 2 und dem Kautschuk 3 wird das Schleppmittel 42 mit einem Gewichtsanteil von 0,1 Gew.-% bis 3 Gew.-%, insbesondere von 0,3 Gew.-% bis 2 Gew.-%, und insbesondere 0,5 Gew.-% bis 1 Gew.-% zugeführt. Durch das in den Kautschuk 3 zugeführte Schleppmittel 42 wird die Mischung M₁ bei Zuführung des Kautschuks 3 und des Schleppmittels 42 in der Zuführzone 34 vergleichsweise stärker gekühlt. Das Schleppmittel 42 wird zusammen mit dem Kautschuk 3 in die Mischung M₁ eingemischt. Mittels der zweiten Schleppmittel-Zuführeinrichtung 67 kann weiteres Schleppmittel 42 in die Mischung M₂ zugeführt werden. Alternativ kann die Schleppmittel-Zuführeinrichtung 67 entfallen. Hinsichtlich des weiteren Aufbaus und der weiteren Funktionsweise der Vorrichtung 1 wird auf das vorangegangene Ausführungsbeispiel verwiesen.

## Patentansprüche

1. Verfahren zur Aufbereitung einer Styrol-Acrylnitril-Schmelze, umfassend folgende Schritte:
- Bereitstellen einer Schneckenmaschine (4) mit einer darin befindlichen Styrol-Acrylnitril-Schmelze (2), wobei mittels einer ersten Zuführeinrichtung (28) Styrol-Acrylnitril in die Schneckenmaschine (4) zugeführt wird,
- Zuführen eines Schleppmittels (42) mittels einer ersten Schleppmittel-Zuführeinrichtung (43) in die Styrol-Acrylnitril-Schmelze (2) in einer Förderrichtung (30) der Schneckenmaschine (4) stromaufwärts zu einer Zuführzone (34) eines Kautschuks (3), so dass das Schleppmittel (42) vor dem Zuführen des Kautschuks (3) zugeführt wird,
- Mischen der Styrol-Acrylnitril-Schmelze (2) mit dem zugeführten Schleppmittel (42) mittels der Schneckenmaschine (4) zu einer Mischung (Mi),
- Entgasen der gebildeten Mischung (M₁) in der Schneckenmaschine (4), und
- Zuführen des Kautschuks (3) mittels einer zweiten Zuführeinrichtung (54) in die Styrol-Acrylnitril-Schmelze (2), wobei die zweite Zuführeinrichtung (54) in der Zuführzone (34) in die Schneckenmaschine (4) mündet.

2. Verfahren nach Anspruch 1, **dadurch gekennzeichnet,**
**dass** bezogen auf die Styrol-Acrylnitril-Schmelze (2) das Schleppmittel (42) mit einem Gewichtsanteil von 0,05 Gew.-% bis 5 Gew.-%, insbesondere von 0,1 Gew.-% bis 3 Gew.-%, und insbesondere 0,2 Gew.-% bis 2 Gew.-% zugeführt wird.

3. Verfahren nach Anspruch 1 oder 2, **dadurch gekennzeichnet, dass** ein Schleppmittel (42) mittels einer zweiten Schleppmittel-Zuführeinrichtung (67) nach dem Zuführen des Kautschuks (3) zugeführt und eine gebildete Mischung (M₃) entgast wird.

4. Verfahren nach Anspruch 3, **dadurch gekennzeichnet,**
**dass** bezogen auf eine Mischung (M₂) aus der Styrol-Acrylnitril-Schmelze (2) und dem Kautschuk (3) das Schleppmittel (42) mit einem Gewichtsanteil von 0,05 Gew.-% bis 5 Gew.-%, insbesondere von 0,2 Gew.-% bis 3,5 Gew.-%, und insbesondere 0,5 Gew.-% bis 2 Gew.-% zugeführt wird.

5. Verfahren nach einem der Ansprüche 1 bis 4, **dadurch gekennzeichnet,**
**dass** das Schleppmittel (42) in der Förderrichtung (30) der Schneckenmaschine (4) stromaufwärts zu einer Entgasungszone (33, 36) zugeführt wird.

6. Verfahren nach einem der Ansprüche 1 bis 5, **dadurch gekennzeichnet,**
**dass** ein Schleppmittel (42) mittels einer dritten Schleppmittel-Zuführeinrichtung (72) dem Kautschuk (3) in der zweiten Zuführeinrichtung (54) zugeführt wird.

7. Verfahren nach Anspruch 6, **dadurch gekennzeichnet,**
**dass** bezogen auf eine Mischung (M₂) aus der Styrol-Acrylnitril-Schmelze (2) und dem Kautschuk (3) das Schleppmittel (42) mit einem Gewichtsanteil von 0,1 Gew.-% bis 3 Gew.-%, insbesondere von 0,3 Gew.-% bis 2 Gew.-%, und insbesondere 0,5 Gew.-% bis 1 Gew.-% zugeführt wird.

8. Verfahren nach einem der Ansprüche 1 bis 7, **dadurch gekennzeichnet,**
**dass** das Schleppmittel (42) Wasser ist.

9. Verfahren nach einem der Ansprüche 1 bis 8, **dadurch gekennzeichnet,**
**dass** der Kautschuk (3) bei Zuführung in die zweite Zuführeinrichtung (54) einen Wassergehalt von höchstens 27 Gew.-%, insbesondere von höchstens 23 Gew.-%, und insbesondere von höchstens 18 Gew.-% hat.

10. Verfahren nach einem der Ansprüche 1 bis 9, **dadurch gekennzeichnet,**
**dass** der Kautschuk (3) bei Zuführung in die zweite Zuführeinrichtung (54) eine Temperatur T_{K0} und bei Zuführung in die Styrol-Acrylnitril-Schmelze (2) eine Temperatur T_{K1} hat, wobei für eine Temperaturdifferenz ΔT_{K} = T_{K1} - T_{K0} gilt: ΔT_{K} ≤ 40 °C, insbesondere ΔT_{K} ≤ 30 °C, und insbesondere ΔT_{K} ≤ 20 °C.

11. Verfahren nach einem der Ansprüche 1 bis 10, **dadurch gekennzeichnet,**
**dass** der Kautschuk (3) bei Zuführung in die Styrol-Acrylnitril-Schmelze (2) eine Temperatur T_{K1} hat, wobei für T_{K1} gilt: T_{K1} ≤ 60 °C, insbesondere T_{K1} ≤ 50 °C, und insbesondere T_{K1} ≤ 40 °C.

12. Verfahren nach einem der Ansprüche 1 bis 11, **dadurch gekennzeichnet,**
**dass** mindestens eine Entgasungseinrichtung (44, 69) an der Schneckenmaschine (4) angeordnet ist.

13. Verfahren nach Anspruch 12, **dadurch gekennzeichnet,**
**dass** die mindestens eine Entgasungseinrichtung (44, 69) ein Vakuum mit einem Druck zwischen 0 mbar_{abs} und 1000 mbar_{abs}, insbesondere zwischen 10 mbar_{abs} und 800 mbar_{abs}, und insbesondere zwischen 20 mbar_{abs} und 400 mbar_{abs} erzeugt.

14. Vorrichtung zur Durchführung eines Verfahrens zur Aufbereitung einer Styrol-Acrylnitril-Schmelze nach einem der Ansprüche 1 bis 13 mit
- einer Schneckenmaschine (4),
- einer ersten Zuführeinrichtung (28) zum Zuführen von Styrol-Acrylnitril in die Schneckenmaschine (4),
- mindestens einer Schleppmittel-Zuführeinrichtung (43, 67, 72) zum Zuführen eines Schleppmittels (42),
- einer zweiten Zuführeinrichtung (54) zum Zuführen von Kautschuk (3) in die Schneckenmaschine (4), wobei die zweite Zuführeinrichtung (54) in eine Zuführzone (34) der Schneckenmaschine (4) mündet, und
- mindestens einer Entgasungseinrichtung (44, 69),
**dadurch gekennzeichnet,**
**dass** die zweite Zuführeinrichtung (54) in einer Förderrichtung (30) stromabwärts zu der ersten Zuführeinrichtung (28) angeordnet ist, und
**dass** eine erste Schleppmittel-Zuführeinrichtung (43) zum Zuführen des Schleppmittels (42) in eine Styrol-Acrylnitril-Schmelze (2) in der Förderrichtung (30) stromaufwärts zu der Zuführzone (34) des Kautschuks (3) angeordnet ist.

## Claims

1. A method for preparing a styrene-acrylonitrile melt comprising the steps of:
- providing a screw machine (4) having a styrene-acrylonitrile melt (2) contained therein, wherein styrene-acrylonitrile is fed into the screw machine (4) by means of a first feeding device (28),
- feeding an entraining agent (42) by means of a first entraining agent feeding means (43) into the styrene-acrylonitrile melt (2) in a feeding direction (30) of the screw machine (4) upstream to a feeding zone (34) of a rubber (3) so that the entraining agent (42) is fed prior to feeding the rubber (3),
- mixing the styrene-acrylonitrile melt (2) with the fed entraining agent (42) by means of the screw machine (4) to form a mixture (Mi),
- degassing of the mixture formed (M₁) in the screw machine (4), and
- feeding the rubber (3) into the styrene-acrylonitrile melt (2) by means of a second feeding device (54), wherein the second feeding device (54) opens into the screw machine (4) in the feeding zone (34).

2. A method according to claim 1, **characterized in**
**that,** in relation to the styrene-acrylonitrile melt (2), the entraining agent (42) is fed in a proportion by weight of 0.05% by weight to 5% by weight, in particular from 0.1% by weight to 3% by weight, and in particular from 0.2% by weight to 2% by weight.

3. A method according to claim 1 or 2, **characterized in**
**that** an entraining agent (42) is fed by means of a second entraining agent feeding device (67) after the rubber (3) has been fed and a mixture formed (M₃) is degassed.

4. A method according to claim 3, **characterized in**
**that,** in relation to a mixture (M₂) of the styrene-acrylonitrile melt (2) and the rubber (3), the entraining agent (42) is fed in a proportion by weight of 0.05% by weight to 5% by weight, in particular from 0.2% by weight to 3.5% by weight, and in particular from 0.5% by weight to 2% by weight.

5. A method according to any one of claims 1 to 4, **characterized in that** the entraining agent (42) is fed upstream in the conveying direction (30) of the screw machine (4) to a degassing zone (33, 36).

6. A method according to any one of claims 1 to 5, **characterized in that** an entraining agent (42) is fed to the rubber (3) in the second feeding device (54) by means of a third entraining agent feeding device (72).

7. A method according to claim 6, **characterized in**
**that,** in relation to a mixture (M₂) of the styrene-acrylonitrile melt (2) and the rubber (3), the entraining agent (42) is fed in a proportion by weight of 0.1% by weight to 3% by weight, in particular from 0.3% by weight to 2% by weight, and in particular from 0.5% by weight to 1% by weight.

8. A method according to any one of claims 1 to 7, **characterized in that** the entraining agent (42) is water.

9. A method according to any one of claims 1 to 8, **characterized in that** the rubber (3), when fed into the second feeding device (54), has a water content of at most 27% by weight, in particular at most 23% by weight, and in particular at most 18% by weight.

10. A method according to any one of claims 1 to 9, **characterized in that** the rubber (3) has a temperature T_{K0} when it is fed into the second feeding device (54) and a temperature T_{K1} when it is fed into the styrene-acrylonitrile melt (2), wherein the following applies for a temperature difference ΔT_{K} = T_{K1} - T_{K0} : ΔT_{K} ≤ 40°C, in particular ΔT_{K} ≤ 30°C, and in particular ΔT_{K} ≤ 20°C.

11. A method according to any one of claims 1 to 10, **characterized in that** the rubber (3) has a temperature T_{K1} when it is fed into the styrene-acrylonitrile melt (2), wherein the following applies to T_{K1}: T_{K1} ≤ 60°C, in particular T_{K1} ≤ 50°C, and in particular T_{K1} ≤ 40°C.

12. A method according to any one of claims 1 to 11, **characterized in that** at least one degassing device (44, 69) is arranged at the screw machine (4).

13. A method according to claim 12, **characterized in that** the at least one degassing device (44, 69) generates a vacuum with a pressure between 0 mbar_{abs} and 1000 mbar_{abs}, in particular between 10 mbar_{abs} and 800 mbar_{abs}, and in particular between 20 mbar_{abs} and 400 mbar_{abs}.

14. An apparatus for carrying out a method for preparing a styrene-acrylonitrile melt according to any one of claims 1 to 13, comprising
- a screw machine (4),
- a first feeding device (28) for feeding styrene acrylonitrile into the screw machine (4),
- at least one entraining agent feeding device (43, 67, 72) for feeding an entraining agent (42),
- a second feeding device (54) for feeding rubber (3) into the screw machine (4), wherein the second feeding device (54) opens into a feed zone (34) of the screw machine (4), and
- at least one degassing device (44, 69),
**characterized in**
**that** the second feeding device (54) is arranged in a conveying direction (30) downstream to the first feeding device (28), and
**that** a first entraining agent feeding device (43) for feeding the entraining agent (42) into a styrene-acrylonitrile melt (2) is arranged upstream to the feed zone (34) of the rubber (3) in the conveying direction (30).

## Revendications

1. Procédé de traitement d'une masse fondue de styrène-acrylonitrile, comprenant les étapes suivantes :
- mise à disposition d'une machine à vis (4) avec une masse fondue de styrène-acrylonitrile (2) se trouvant à l'intérieur, dans lequel du styrène-acrylonitrile est alimenté dans la machine à vis (4) au moyen d'un premier dispositif d'alimentation (28),
- alimentation d'un agent d'entraînement (42) au moyen d'un premier dispositif d'alimentation en agent d'entraînement (43) dans la masse fondue de styrène-acrylonitrile (2) dans une direction de transport (30) de la machine à vis (4) en amont d'une zone d'alimentation (34) d'un caoutchouc (3), de sorte que l'agent d'entraînement (42) est fourni avant l'alimentation du caoutchouc (3),
- mélange de la masse fondue de styrène-acrylonitrile (2) avec l'agent d'entraînement (42) fourni au moyen de la machine à vis (4) pour obtenir un mélange (M₁),
- dégazage du mélange formé (M₁) dans la machine à vis (4), et
- alimentation du caoutchouc (3) dans la masse fondue de styrène-acrylonitrile (2) au moyen d'un deuxième dispositif d'alimentation (54), le deuxième dispositif d'alimentation (54) débouchant dans la machine à vis (4) dans la zone d'alimentation (34).

2. Procédé selon la revendication 1, **caractérisé en ce**
**que,** par rapport à la masse fondue de styrène-acrylonitrile (2), l'agent d'entraînement (42) est alimenté avec une proportion en poids de 0,05 % en poids à 5 % en poids, en particulier de 0,1 % en poids à 3 % en poids, et en particulier de 0,2 % en poids à 2 % en poids.

3. Procédé selon la revendication 1 ou 2, **caractérisé en ce**
**qu'**un agent d'entraînement (42) est alimenté au moyen d'un deuxième dispositif d'alimentation en agent d'entraînement (67) après l'alimentation du caoutchouc (3) et un mélange formé (M₃) est dégazé.

4. Procédé selon la revendication 3, **caractérisé en ce**
**que,** par rapport à un mélange (M₂) de la masse fondue de styrène-acrylonitrile (2) et du caoutchouc (3), l'agent d'entraînement (42) est alimenté avec une proportion en poids de 0,05 % en poids à 5 % en poids, en particulier de 0,2 % en poids à 3,5 % en poids, et en particulier de 0,5 % en poids à 2 % en poids.

5. Procédé selon l'une quelconque des revendications 1 à 4, **caractérisé en ce**
**que** l'agent d'entraînement (42) est alimenté dans la direction de transport (30) de la machine à vis (4) en amont d'une zone de dégazage (33, 36).

6. Procédé selon l'une quelconque des revendications 1 à 5, **caractérisé en ce**
**qu'**un agent d'entraînement (42) est alimenté au caoutchouc (3) dans le deuxième dispositif d'alimentation (54) au moyen d'un troisième dispositif d'alimentation en agent d'entraînement (72).

7. Procédé selon la revendication 6, **caractérisé en ce**
**que,** par rapport à un mélange (M₂) de la masse fondue de styrène-acrylonitrile (2) et du caoutchouc (3), l'agent d'entraînement (42) est alimenté avec une proportion en poids de 0,1 % en poids à 3 % en poids, en particulier de 0,3 % en poids à 2 % en poids, et en particulier de 0,5 % en poids à 1 % en poids.

8. Procédé selon l'une quelconque des revendications 1 à 7, **caractérisé en ce**
**que** l'agent d'entraînement (42) est de l'eau.

9. Procédé selon l'une quelconque des revendications 1 à 8, **caractérisé en ce**
**que** le caoutchouc (3) a, lors de l'alimentation dans le deuxième dispositif d'alimentation (54), une teneur en eau de 27 % en poids au maximum, en particulier de 23 % en poids au maximum, et en particulier de 18 % en poids au maximum.

10. Procédé selon l'une quelconque des revendications 1 à 9, **caractérisé en ce**
**que** le caoutchouc (3) a une température T_{K0} lors de l'alimentation dans le deuxième dispositif d'alimentation (54) et une température T_{K1} lors de l'alimentation dans la masse fondue de styrène-acrylonitrile (2), où pour une différence de température ΔT_{K} = T_{K1} - T_{K0} : ΔT_{K} ≤ 40 °C, en particulier ΔT_{K} ≤ 30 °C, et en particulier ΔT_{K} ≤ 20 °C.

11. Procédé selon l'une quelconque des revendications 1 à 10, **caractérisé en ce**
**que** le caoutchouc (3) a une température T_{K1} lors de son alimentation dans la masse fondue de styrène-acrylonitrile (2), T_{K1} répondant à la formule : T_{K1} ≤ 60 °C, en particulier T_{K1} ≤ 50 °C, et en particulier T_{K1} ≤ 40 °C.

12. Procédé selon l'une quelconque des revendications 1 à 11, **caractérisé en ce**
**qu'**au moins un dispositif de dégazage (44, 69) est disposé sur la machine à vis sans fin (4).

13. Procédé selon la revendication 12, **caractérisé en ce**
**que** ledit au moins un dispositif de dégazage (44, 69) produit un vide avec une pression comprise entre 0 mbar_{abs} et 1000 mbar_{abs}, en particulier entre 10 mbar_{abs} et 800 mbar_{abs}, et en particulier entre 20 mbar_{abs} et 400 mbar_{abs}.

14. Dispositif pour la mise en oeuvre d'un procédé de préparation d'une masse fondue de styrène-acrylonitrile selon l'une quelconque des revendications 1 à 13, comprenant
- une machine à vis (4),
- un premier dispositif d'alimentation (28) pour l'alimentation de styrène-acrylonitrile dans la machine à vis (4),
- au moins un dispositif d'alimentation en agent d'entraînement (43, 67, 72) pour alimenter un agent d'entraînement (42),
- un deuxième dispositif d'alimentation (54) pour amener du caoutchouc (3) dans la machine à vis (4), le deuxième dispositif d'alimentation (54) débouchant dans une zone d'alimentation (34) de la machine à vis (4), et
- au moins un dispositif de dégazage (44, 69),
**caractérisé en ce**
**que** le deuxième dispositif d'alimentation (54) est disposé dans une direction de transport (30) en aval du premier dispositif d'alimentation (28), et
**qu'**un premier dispositif d'alimentation en agent d'entraînement (43) pour alimenter l'agent d'entraînement (42) dans une masse fondue de styrène-acrylonitrile (2) est disposé dans la direction de transport (30) en amont de la zone d'alimentation (34) du caoutchouc (3).
